# EUROPEAN PATENT SPECIFICATION

(11) **EP 4 105 513 B1**
(45) Date of publication and mention of the grant of the patent: **13.08.2025**
(21) Application number: 20918920.8
(22) Date of filing: 15.12.2020
(51) Int. Cl.: F16D 65/02, F16D 65/12

(54) **COMPOSITE BRAKE DISC CONNECTING ASSEMBLY, AND COMPOSITE BRAKE DISC**
VERBUNDBREMSSCHEIBENVERBINDUNGSANORDNUNG UND ZUSAMMENGESETZTE BREMSSCHEIBE
ENSEMBLE DE RACCORDEMENT DE DISQUE DE FREIN COMPOSITE ET DISQUE DE FREIN COMPOSITE

(30) Priority: 12.02.2020 CN 202010087952
(43) Date of publication of application: 21.12.2022
(73) Proprietor: YANTAI WINHERE AUTO-PART MANUFACTURING CO., LTD, Yantai, Shandong 264006 (CN)
(72) Inventor: XIN, Shucheng, Yantai, Shandong 264006 (CN); PACCHIANA, Giovanni Paolo, 24036 Bergamo (IT); WANG, Xiangyu, Yantai, Shandong 264006 (CN); ZHANG, Zhongxu, Yantai, Shandong 264006 (CN)
(74) Representative: Dehns Germany Partnerschaft mbB
(86) International application number: PCT/CN2020/136613
(87) International publication number: WO 2021/159854

(56) References cited:
- EP-A1- 3 441 638
- EP-A2- 2 604 883
- CN-A- 103 161 855
- CN-A- 111 173 864
- CN-U- 205 524 181
- CN-U- 211 715 590
- US-A- 4 465 165
- US-A1- 2004 182 660
- US-A1- 2014 124 309

## Description

### Cross-Reference to Related Disclosure

The present disclosure claims priority to Chinese patent application No. 202010087952.7, filed to the China National Intellectual Property Administration on February 12, 2020 and entitled "Composite Brake Disc Connecting Assembly and Composite Brake Disc".

### Technical Field

The present invention relates to a composite brake disc comprising a plurality of composite brake disc connecting assemblies, and belongs to a technical field of brake disc machining.

### Background

Most conventional brake discs have an integrated structure made of a gray cast iron material, have a large weight at a defined boundary, and have large deformation under thermal expansion, which cannot meet the potential requirements of passenger vehicles and electric automobiles for NVH and light weight.

However, the existing composite brake disc needs to satisfy both light weight requirement and NVH requirement, and thus the composite brake disc has a complicated structure, a large number of component parts, a high cost, a complicated assembling process, and high difficulty of process control. As the existing composite brake disc has a high cost, it can only be applied in foreign-capital luxury brands or supercars, and there is an urgent need for a low-cost solution in the market.

In addition, the density of gray cast iron is usually between 7.2 ± 0.3 g/cm³, and the strength thereof varies from 130 Mpa to 300 Mpa; however, the density of aluminum alloy is only about 1/3 of that of the gray cast iron and is about 2.7 g/cm³; and after thermal treatment, the strength of the aluminum alloy can be as high as 250 Mpa and more, but the heat resistance thereof is poor. Therefore, if the aluminum alloy is used to replace or partially replace the conventional gray cast iron material, the light weight requirement of a vehicle for a brake disc can be satisfied.

Examples of a composite disc rotor according to the prior art are known from EP 2 604 883 A2.

### Summary

In view of the disadvantages of the related art, the present invention provides a composite brake disc using a composite brake disc connecting assembly, which have a simple structure, a light weight, convenient assembly and a low cost.

The invention provides a composite brake disc as defined in claim 1. Advantageous embodiments are the subject matter of the dependent claims

The beneficial effects of some embodiments of the present invention are: the connecting bridge of the spring member connects the pair of elastic pieces, and the pair of elastic pieces of the spring member are correspondingly mounted in the pair of U-shaped clamping slots of the sleeve, to achieve the functions of assisting force transfer and buffering; and the present invention has a simple structure, a small number of component parts, a light weight, and a simple assembly process, reduces the variation of the assembly process, and reduces the production cost.

On the basis of the described technical solution, the present invention may also be improved as follows.

In some preferred embodiments, each U-shaped clamping slot includes a bottom surface for transferring a torque and two side surfaces for transferring an axial force.

The beneficial effects of using the described further solution are: the bottom surface and the side surfaces of the U-shaped clamping slot are force transferring surfaces; the bottom surface of the U-shaped clamping slot constrains a brake disc hat, and when a vehicle is braking, the bottom surface is used for transferring a circumferential force of a friction ring on the brake disc hat; and the side surfaces constrain two surfaces of the brake disc hat and are used for transferring an axial force of the brake disc hat on the friction ring.

In some preferred embodiments, the connecting assembly further includes a fastener inserted in the connecting hole.

The beneficial effect of using the described further solution is: the connecting assembly is mounted between the brake disc hat and the friction ring, and the fastener is inserted into the sleeve, to achieve connection and locking between the friction ring and the brake disc hat.

In some preferred embodiments, the fastener is a fastening bolt, a riveting or a bolt and nut pair. When the fastener is the fastening bolt, the sleeve is internally provided with an internal thread adapted to the fastener.

The beneficial effects of using the described further solution are: the fastener may use a fastening bolt, an internal thread is provided in the corresponding sleeve, and the fastening bolt is inserted into the sleeve and is in threaded connection with the internal thread to achieve locking; the fastener may achieve locking by using a rivet; a bolt and nut pair may also be used; and the connecting assembly can be locked according to actual mounting conditions, so that on the one hand, the assembly is convenient, and on the other hand, materials are convenient to obtain, thereby reducing the production cost.

In some preferred embodiments, each U-shaped elastic piece includes an upper elastic piece portion and a lower elastic piece portion, wherein the upper elastic piece portion and/or the lower elastic piece portion have a curved structure.

The beneficial effect of using the described further solution is: the elasticity of the elastic piece is increased.

In some preferred embodiments, the connecting bridge has a sheet, mesh, strip, columnar, cuboid or curved structure.

The beneficial effects of using the described further solution are: a sheet connecting bridge occupies a small space while satisfying the connection strength of the pair of elastic pieces of the spring member, facilitates mounting in a disc hat notch of the brake disc hat, is convenient and quick to mount, and improves the mounting stability of the spring member. The sheet, mesh and strip shape can save space and achieve the purpose of weight reduction; and the columnar, cuboid, or curved structure may be used on structures which do not have strict requirements on space, but have high requirements for the strength of the elastic pieces.

In some preferred embodiments, the sleeve and the spring member are made of steel, iron, aluminum and aluminum alloy, ceramic or carbon fiber.

The beneficial effect of using the described further solution is: a sleeve and a spring member of suitable materials can be selected according to actual needs, as long as they can satisfy the requirements of connection strength and light weight.

The beneficial effects of some embodiments of the present invention are: when a vehicle is braking, a friction plate generates a braking torque which is transferred to the spring member by the sleeve and then transferred to the brake disc hat by the spring member, and the brake disc hat is connected with a drive shaft or a driven shaft by a hub, thereby reducing the vehicle speed. As a connecting region between the sleeve and the brake disc hat is in clearance fit, the clearance is compensated by the elasticity of the spring member, and when braking on road surfaces of rough roads such as a gravel road, the generation of noise between the sleeve and the brake disc hat can be prevented; in addition, during braking, the friction of a friction pair generates heat to expand the friction ring, and as the diameter direction of the friction ring is not constrained, the sleeve can be further driven to move along the spring member; and the spring member has elasticity, and generates a pre-pressure after being assembled with the brake disc hat, and thus when the friction ring is heated and expanded, the sleeve can be driven to move along the spring member, preventing the brake disc hat from being damaged caused by frequent action force between the sleeve and the brake disc hat after repeated braking without spring member, thereby further affecting the transfer of a braking torque. In conclusion, the composite brake disc using the connecting assembly in some embodiments of the present invention has a simple structure, the friction ring can move radially, reducing the deformation amount of the friction ring and preventing brake judder; the whole assembly process is simple, the number of parts is small, the production cost is reduced, and the sources causing variation during the process are reduced.

In some embodiments of the present invention, the brake disc hat includes a hat brim, a plurality of disc hat notches for mounting the spring members are uniformly distributed in a circumferential direction of the outer edge of the hat brim, disc hat steps are provided between adjacent disc hat notches of the plurality of disc hat notches, the elastic pieces of the composite brake disc connecting assemblies are snap-fitted onto the disc hat steps, the lower pressing plates of the composite brake disc connecting assemblies are provided between the brake disc hat and the friction ring, an inner ring for mounting the hat brim is provided inside the friction ring, mounting holes cooperating with the disc hat notches are uniformly distributed on the inner ring, bottom parts of the connecting columns of the composite brake disc connecting assemblies are inserted into the mounting holes, and the friction ring and the brake disc hat are connected by the fasteners inserted into the connecting columns.

The beneficial effects of some embodiments of the present invention are: the connecting assembly has a simple structure and a small number of parts, and the design of the mounting holes on the friction ring and the disc hat notches enables the assembly of the composite brake disc to be simpler, and the sources causing variation during the process are reduced.

In some embodiments of the present invention, an upper surface and a lower surface of each disc hat step are respectively provided with an upper groove and lower groove for positioning the upper elastic piece portion and the lower elastic piece portion.

The beneficial effect of some embodiments of the present invention is: the upper groove may limit the upper elastic piece portion, and the lower groove may limit the lower elastic piece portion.

In some preferred embodiments, the friction ring includes an upper friction ring and a lower friction ring connecting ribs are provided between the upper friction ring and the lower friction ring, and the inner ring is arranged inside the upper friction ring.

The beneficial effects of using the described further solution are: the inner ring is arranged inside the upper friction ring, mounting spaces for fasteners are reserved between the inner ring and the lower friction ring, and the fasteners are inserted into the sleeves from the direction of the lower friction ring, thereby facilitating mounting of the fasteners, the assembly being convenient and quick.

In some preferred embodiments, a plurality of friction ring notches are uniformly distributed in the circumferential direction of the inner ring, friction ring protrusions are provided between adjacent friction ring notches of the plurality of friction ring notches, and the mounting holes are provided on the friction ring protrusions.

The beneficial effect of using the described further solution is: the friction ring notches reduce the weight of the brake disc as far as possible while satisfying the requirements of connection and mounting to the brake disc hat, thereby satisfying the requirement of light weight of the brake disc.

### Brief Description of the Drawings

Fig. 1 is a structural schematic diagram of a connecting assembly being part of some embodiments of the present invention;
Fig. 2 is a structural schematic diagram of a sleeve of a connecting assembly being part of some embodiments of the present invention;
Fig. 3 is a structural schematic diagram of a spring member of a connecting assembly being part of some embodiments of the present invention;
Fig. 4 is a structural schematic diagram of a connecting assembly provided with a fastener being part of some embodiments of the present invention;
Fig. 5 is a split structural schematic diagram of Fig. 4;
Fig. 6 is a schematic diagram of a perspective structure of a composite brake disc according to some embodiments of the present invention;
Fig. 7 is a split structural schematic diagram of a composite brake disc according to some embodiments of the present invention;
Fig. 8 is a schematic diagram of an overlooking structure of a composite brake disc according to some embodiments of the present invention;
Fig. 9 is a sectional view along A-A direction in Fig. 8;
Fig. 10 is a sectional view along B-B direction in Fig. 8;
Fig. 11 is a partially enlarged view of C in Fig. 10;
Fig. 12 is a structural schematic diagram of a friction ring according to some embodiments of the present invention;
Fig. 13 is a structural schematic diagram of upper grooves of a brake disc hat according to some embodiments of the present invention;
Fig. 14 is a structural schematic diagram of lower grooves of a brake disc hat according to some embodiments of the present invention; and
Fig. 15 is a structural schematic diagram of mounting holes in a composite brake disc according to some embodiments of the present invention.

In the drawings, 1: sleeve; 101: upper pressing plate; 102: lower pressing plate; 103: connecting column; 104: connecting hole; 106: bottom surface; 107: side surface; 2: spring member; 201: connecting bridge; 202: upper elastic piece portion; 203: lower elastic piece portion; 204: curved structure; 3: fastener; 4: brake disc hat; 401: disc hat notch; 402: disc hat step; 403: upper groove; 404: lower groove; 5: friction ring; 501: upper friction ring; 502: lower friction ring; 503: connecting rib; 504: inner ring; 505: mounting hole; and 506: friction ring notch.

### Detailed Description of the Embodiments

Hereinafter, the principle and features of some embodiments of the present invention will be described in combination with examples, and the listed examples are only used to explain some embodiments of the present invention, but are not used to limit the scope of some embodiments of the present invention, which is defined by the appended claims.

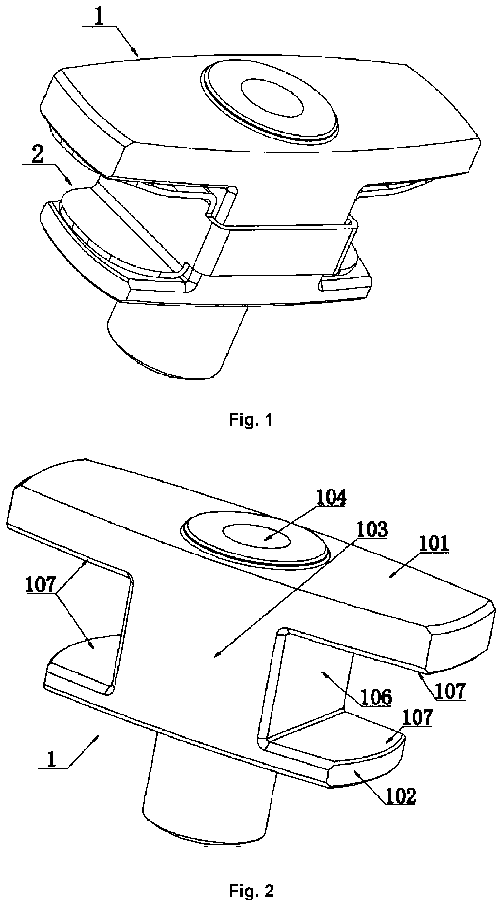

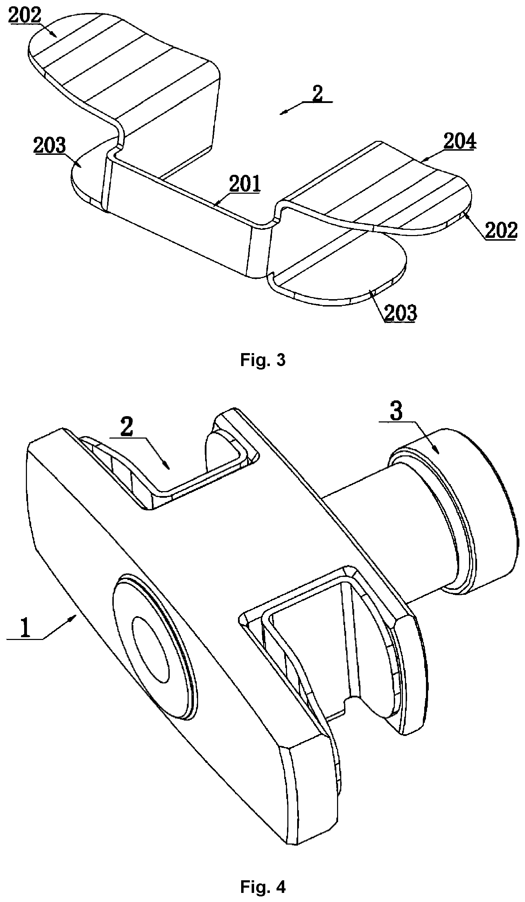

As shown in Figs. 1-5, a composite brake disc connecting assembly being part of a composite brake disc according to the present invention includes a sleeve 1 and a spring member 2; wherein the sleeve includes an upper pressing plate 101, a lower pressing plate 102 and a connecting column 103 connecting the upper pressing plate and the lower pressing plate; the center of the connecting column is provided with a connecting hole 104, and a pair of U-shaped clamping slots are formed between the upper pressing plate, the lower pressing plate and the connecting column; and the spring member 2 includes a pair of elastic pieces cooperating with the pair of U-shaped clamping slots and a connecting bridge 201 connecting the pair of elastic pieces.

Each of the pair of U-shaped clamping slots includes a bottom surface 106 for transferring a torque and two side surfaces 107 for transferring an axial force. The bottom surface and the side surfaces of the U-shaped clamping slot are force transferring surfaces; the bottom surface of the U-shaped clamping slot constrains a brake disc hat, and when a vehicle is braking, the bottom surface is used for transferring a circumferential force of a friction ring on the brake disc hat; and the side surfaces constrain two surfaces of the brake disc hat and are used for transferring an axial force of the brake disc hat on the friction ring.

The connecting assembly further includes a fastener 3 inserted on the connecting column. The connecting assembly is mounted between the brake disc hat and the friction ring, and the fastener is inserted into the sleeve, to achieve connection and locking between the friction ring and the brake disc hat.

The fastener is a fastening bolt, a riveting or a bolt and nut pair. When the fastener is the fastening bolt, the sleeve is internally provided with an internal thread adapted to the fastener. The fastener may use a fastening bolt, an internal thread is provided in the corresponding sleeve, and the fastening bolt is inserted into the sleeve and is in threaded connection with the internal thread to achieve locking; the fastener may achieve locking by using a rivet; a bolt and nut pair may also be used; and the connecting assembly can be locked according to actual mounting conditions, so that on the one hand, the assembly is convenient, and on the other hand, materials are convenient to obtain, thereby reducing the production cost.

Each U-shaped elastic piece includes an upper elastic piece portion 202 and a lower elastic piece portion 203, wherein the upper elastic piece portion and/or the lower elastic piece portion have a curved structure 204. The elasticity of the elastic piece is increased.

The connecting bridge has a sheet, mesh, strip, columnar, cuboid or curved structure. A sheet connecting bridge occupies a small space while satisfying the connection strength of the pair of elastic pieces of the spring member, facilitates mounting in a disc hat notch of the brake disc hat, is convenient and quick to mount, and improves the mounting stability of the spring member. The sheet, mesh and strip shape can save space and achieve the purpose of weight reduction; and the columnar, cuboid, or curved structure may be used on structures which do not have strict requirements on space, but have high requirements for the strength of the elastic pieces.

The sleeve and the spring member are made of steel, iron, aluminum and aluminum alloy, ceramic or carbon fiber. A sleeve and a spring member of suitable materials can be selected according to actual needs, as long as they can satisfy the requirements of connection strength and light weight.

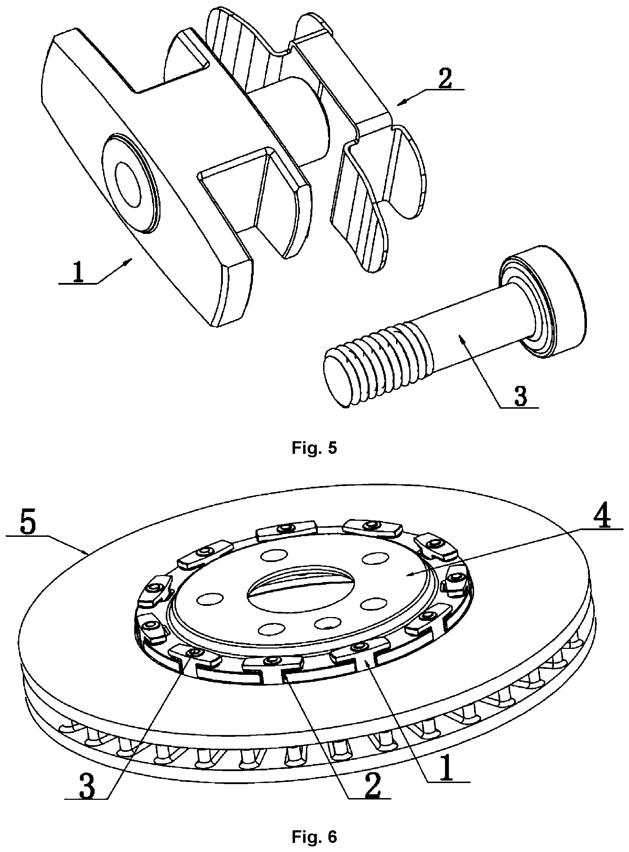

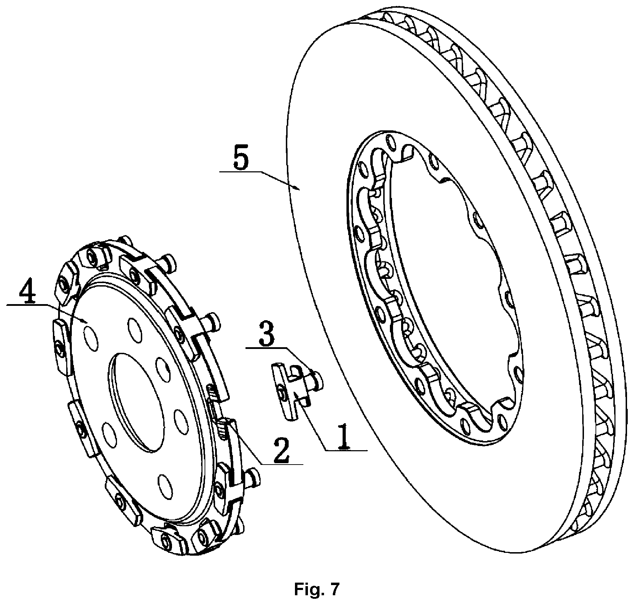

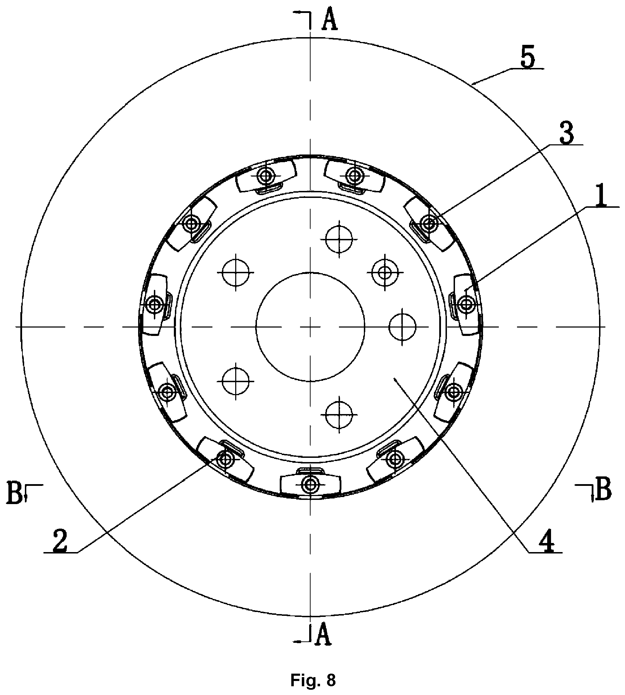

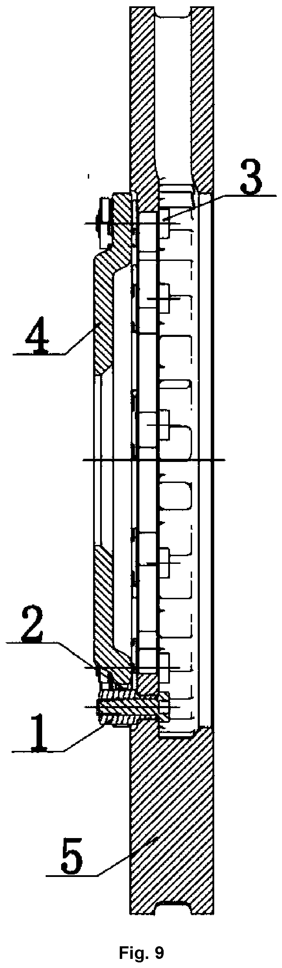

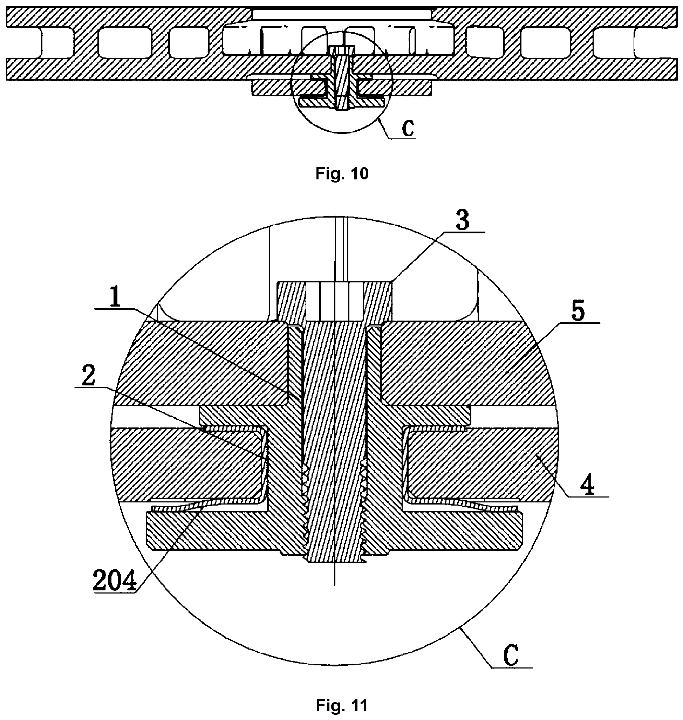

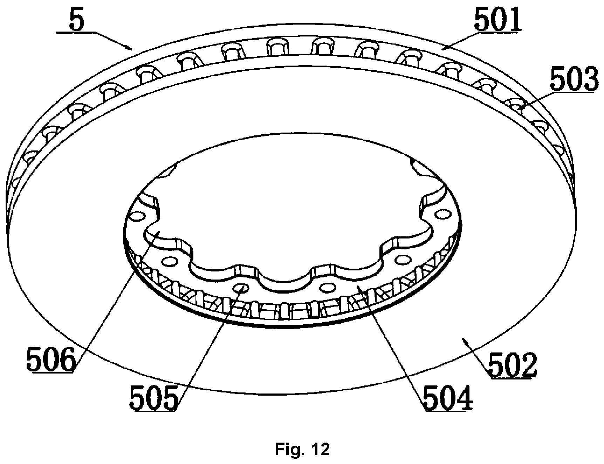

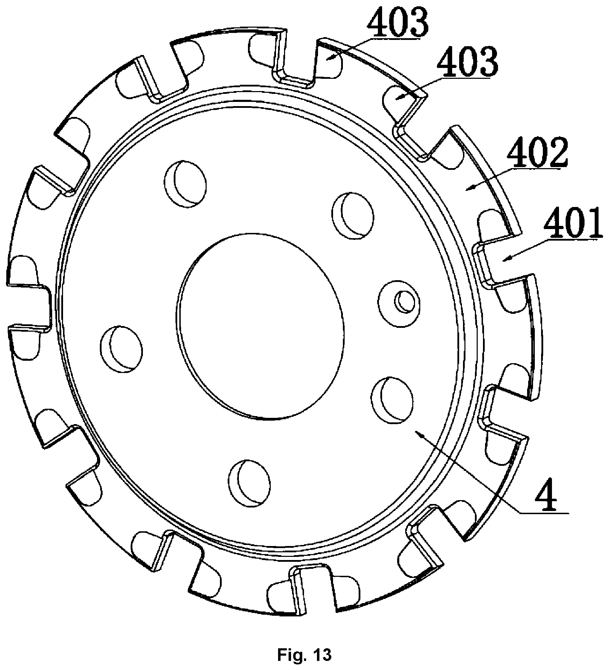

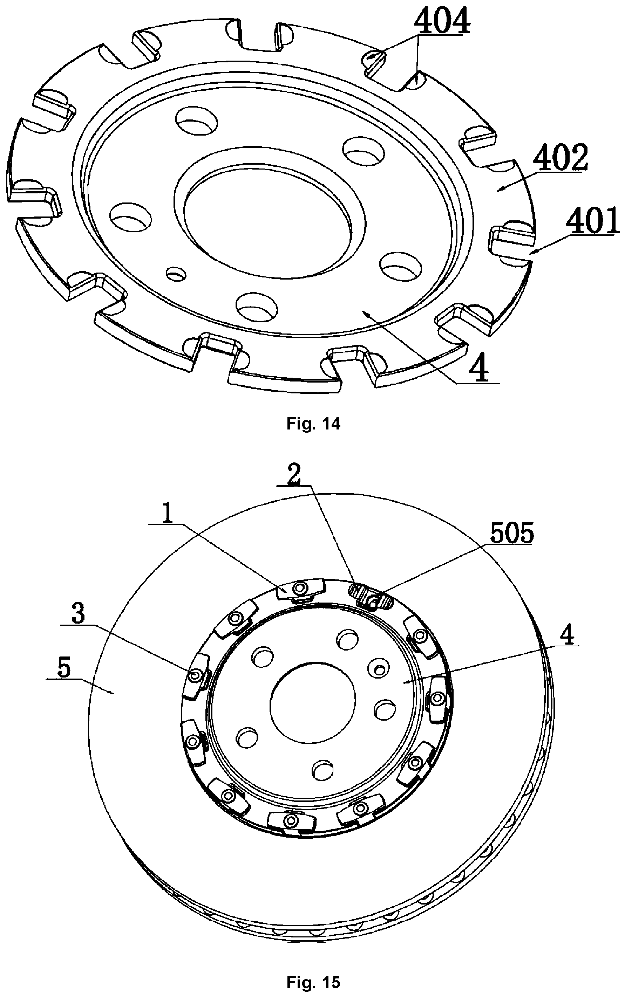

As shown in Figs. 6-15, some embodiments of the present invention further disclose a composite brake disc, including a brake disc hat 4 and a friction ring 5 mounted on the brake disc hat, and further including a plurality of composite brake disc connecting assemblies as stated above, wherein the friction ring is connected to the brake disc hat by means of the plurality of composite brake disc connecting assemblies.

The brake disc hat includes a hat brim, a plurality of disc hat notches 401 for mounting the spring members are uniformly distributed in a circumferential direction of the outer edge of the hat brim, disc hat steps 402 are provided between adjacent disc hat notches, the elastic pieces are snap-fitted onto the disc hat steps, the lower pressing plates are provided between the brake disc hat and the friction ring, an inner ring for mounting the hat brim is provided inside the friction ring, mounting holes cooperating with the disc hat notches are uniformly distributed on the inner ring, bottom parts of the connecting columns are inserted into the mounting holes, and the friction ring and the brake disc hat are connected by the fasteners inserted into the connecting columns.

An upper surface and a lower surface of each disc hat step are respectively provided with upper grooves 403 and lower grooves 404 for positioning the upper elastic piece portions and the lower elastic piece portions. The upper grooves may limit the upper elastic piece portions, and the lower grooves may limit the lower elastic piece portions.

The friction ring 5 includes an upper friction ring 501 and a lower friction ring 502; connecting ribs 503 are provided between the upper friction ring and the lower friction ring, and the inner ring 504 is arranged inside the upper friction ring. The inner ring is arranged inside the upper friction ring, mounting spaces for fasteners are reserved between the inner ring and the lower friction ring, and the fasteners are inserted into the sleeves from the direction of the lower friction ring, thereby facilitating mounting of the fasteners, the assembly being convenient and quick.

A plurality of friction ring notches 506 are uniformly distributed in the circumferential direction of the inner ring, friction ring protrusions are provided between adjacent friction ring notches, and mounting holes 505 are provided on the friction ring protrusions. The friction ring notches reduce the weight of the brake disc as far as possible while satisfying the requirements of connection and mounting to the brake disc hat, thereby satisfying the requirement of light weight of the brake disc.

An assembly process, being not part of the present invention: first, the spring members and the brake disc hat are assembled together, the spring members are in interference fit with the brake disc hat, connecting bridges of the spring members tightly abut against the interior of the disc hat notches, a pair of U-shaped elastic pieces of each spring member are correspondingly snap-fitted with and connected to the disc hat steps on two sides of the disc hat notch, and as the spring member has a certain elasticity and also has a pre-pressure at a position in contact with the brake disc hat, the spring member can be prevented from falling off; then sleeves are assembled onto the spring members, the sleeves are in interference fit with the spring members, a pair of U-shaped clamping slots of each sleeve are correspondingly mounted to a pair of elastic pieces of the spring member, the upper pressing plates of the sleeves are located on the upper part of the brake disc hat, the lower pressing plates of the sleeves are located between the brake disc hat and the friction ring, the sleeves and the spring members are assembled together, and a pre-pressure is applied to the tops of the spring members, so that the sleeves do not fall off after being fitted with the spring members; then the radial positions of the sleeves are adjusted, so that regions of the connecting columns at the bottoms of the sleeves fit the mounting holes on the friction ring; and then the fasteners are mounted, and the assembly is completed.

The described content merely relates to preferred embodiments of the present invention, and is not intended to limit some embodiments of the present invention, which is defined by the appended claims.

## Claims

1. A composite brake disc, comprising a brake disc hat (4) and a friction ring (5) mounted on the brake disc hat (4), wherein the composite brake disc further comprises a plurality of composite brake disc connecting assemblies, and the friction ring (5) is connected to the brake disc hat (4) by the plurality of composite brake disc connecting assemblies;
each of the plurality of composite brake disc connecting assemblies comprising a sleeve (1) and a spring member (2); wherein the sleeve (1) comprises an upper pressing plate (101), a lower pressing plate (102) and a connecting column (103) connecting the upper pressing plate (101) and the lower pressing plate (102); the connecting column (103) is provided with a connecting hole (104), and a pair of U-shaped clamping slots are formed between the upper pressing plate (101), the lower pressing plate (102) and the connecting column (103); and the spring member (2) comprises a pair of elastic pieces cooperating with the pair of U-shaped clamping slots and a connecting bridge (201) connecting the pair of elastic pieces;
the brake disc hat comprises a hat brim (4), a plurality of disc hat notches (401) for mounting the spring members (2) are uniformly distributed in a circumferential direction of an outer edge of the hat brim (4), disc hat steps (402) are provided between adjacent disc hat notches (401) of the plurality of disc hat notches (401), the elastic pieces of the composite brake disc connecting assemblies are snap-fitted onto the disc hat steps (402), the lower pressing plates (102) of the composite brake disc connecting assemblies are provided between the brake disc hat (4) and the friction ring (5), an inner ring (504) is provided inside the friction ring (5), mounting holes (505) cooperating with the disc hat notches (401) are uniformly distributed on the inner ring (5), the connecting columns (103) of the composite brake disc connecting assemblies are inserted into the mounting holes (505), and the friction ring (5) and the brake disc hat (4) are connected by fasteners (3) inserted into the connecting holes (104);
**characterized in that**,
an upper surface and a lower surface of each disc hat step (402) are respectively provided with an upper groove (403) and a lower groove (404) for positioning the upper elastic piece portion (202) and the lower elastic piece portion (203).

2. The composite brake disc as claimed in claim 1, wherein a plurality of friction ring notches (506) are uniformly distributed in a circumferential direction of the inner ring (5), friction ring protrusions are provided between adjacent friction ring notches of the plurality of friction ring notches (506), and the mounting holes (505) are provided on the friction ring protrusions.

3. The composite brake disc as claimed in claim 1, wherein each of the two U-shaped clamping slots comprises a bottom surface (106) for transferring a torque and two side surfaces (107) for transferring an axial force.

4. The composite brake disc as claimed in claim 1 or 3, wherein the connecting assembly further comprises a fastener (3) inserted in the connecting hole (104).

5. The composite brake disc as claimed in claim 4, wherein the fastener (3) is a fastening bolt, a riveting or a bolt and nut pair.

6. The composite brake disc as claimed in claim 1, wherein each of the pair of elastic pieces comprises an upper elastic piece portion (202) and a lower elastic piece portion (203), wherein the upper elastic piece portion (202) and/or the lower elastic piece portion (203) have a curved structure (204).

7. The composite brake disc as claimed in claim 1, wherein the connecting bridge (201) has a sheet, mesh, strip, columnar, cuboid or curved structure.

8. The composite brake disc as claimed in claim 1, wherein the sleeve (1) and the spring member (2) are made of steel, iron, aluminum and aluminum alloy, ceramic or carbon fiber.

## Patentansprüche

1. Verbundbremsscheibe mit einem Bremsscheibenkopf (4) und einem Reibring (5), der auf dem Bremsscheibenkopf (4) angebracht ist, wobei die Verbundbremsscheibe ferner eine Vielzahl von Komposit-Bremsscheibenverbindungsbaugruppen aufweist und der Reibring (5) mit dem Bremsscheibenkopf (4) durch die Vielzahl von Verbundbremsscheiben-Verbindungsbaugruppen verbunden ist;
wobei jede der Vielzahl von Verbundbremsscheiben-Verbindungsbaugruppen eine Hülse (1) und ein Federelement (2) umfasst; wobei die Hülse (1) eine obere Druckplatte (101), eine untere Druckplatte (102) und eine Verbindungssäule (103) umfasst, die die obere Druckplatte (101) und die untere Druckplatte (102) verbindet; die Verbindungssäule (103) mit einem Verbindungsloch (104) versehen ist und ein Paar U-förmiger Klemmschlitze zwischen der oberen Druckplatte (101), der unteren Druckplatte (102) und der Verbindungssäule (103) ausgebildet ist; und das Federelement (2) ein Paar elastischer Teile, die mit dem Paar U-förmiger Klemmschlitze zusammenwirken, und eine Verbindungsbrücke (201) umfasst, die das Paar elastischer Teile verbindet;
der Bremsscheibenkopf einen Kopfrand (4) umfasst, eine Vielzahl von Scheibenkopfkerben (401) zur Befestigung der Federelemente (2) gleichmäßig in einer Umfangsrichtung eines äußeren Randes des Kopfrandes (4) verteilt sind, Scheibenkopfstufen (402) zwischen benachbarten Scheibenkopfkerben (401) der Vielzahl von Scheibenkopfkerben (401) vorgesehen sind, die elastischen Teile der Verbundbremsscheiben-Verbindungsbaugruppen auf die Scheibenkopfstufen (402) aufgeschnappt werden, die unteren Druckplatten (102) der Verbundbremsscheiben-Verbindungsbaugruppen zwischen dem Bremsscheibenkopf (4) und dem Reibring (5) vorgesehen sind, ein Innenring (504) innerhalb des Reibrings (5) vorgesehen ist, Befestigungslöcher (505), die mit den Scheibenaussparungen (401) zusammenwirken, gleichmäßig auf dem Innenring (5) verteilt sind, die Verbindungsstützen (103) der Verbundbremsscheiben-Verbindungsbaugruppen in die Montagelöcher (505) eingesetzt sind und der Reibring (5) und der Bremsscheibenkopf (4) durch in die Verbindungslöcher (104) eingesetzte Befestigungsmittel (3) verbunden sind;
**dadurch gekennzeichnet, dass**
eine obere Fläche und eine untere Fläche jeder Scheibenkopfstufe (402) jeweils mit einer oberen Nut (403) und einer unteren Nut (404) zum Positionieren des oberen elastischen Teilstücks (202) und des unteren elastischen Teilstücks (203) versehen sind.

2. Verbundbremsscheibe nach Anspruch 1, wobei eine Vielzahl von Reibringkerben (506) gleichmäßig in einer Umfangsrichtung des Innenrings (5) verteilt sind, Reibringvorsprünge zwischen benachbarten Reibringkerben der Vielzahl von Reibringkerben (506) vorgesehen sind, und die Befestigungslöcher (505) an den Reibringvorsprüngen vorgesehen sind.

3. Verbundbremsscheibe nach Anspruch 1, wobei jeder der beiden U-förmigen Klemmschlitze eine Bodenfläche (106) zur Übertragung eines Drehmoments und zwei Seitenflächen (107) zur Übertragung einer Axialkraft aufweist.

4. Verbundbremsscheibe nach Anspruch 1 oder 3, wobei die Verbindungsbaugruppe ferner ein in das Verbindungsloch (104) eingesetztes Befestigungselement (3) umfasst.

5. Verbundbremsscheibe nach Anspruch 4, wobei das Befestigungsmittel (3) ein Befestigungsbolzen, eine Niete oder ein Schrauben-Mutter-Paar ist.

6. Verbundbremsscheibe nach Anspruch 1, wobei jedes der beiden elastischen Teile einen oberen elastischen Teil (202) und einen unteren elastischen Teil (203) umfasst, wobei der obere elastische Teil (202) und/oder der untere elastische Teil (203) eine gekrümmte Struktur (204) aufweisen.

7. Verbundbremsscheibe nach Anspruch 1, wobei die Verbindungsbrücke (201) eine Blatt-, Netz-, Streifen-, Säulen-, Quader- oder Bogenstruktur aufweist.

8. Verbundbremsscheibe nach Anspruch 1, wobei die Hülse (1) und das Federelement (2) aus Stahl, Eisen, Aluminium und Aluminiumlegierungen, Keramik oder Kohlefaser hergestellt sind.

## Revendications

1. Disque de frein composite, comprenant un chapeau de disque de frein (4) et un anneau de friction (5) monté sur le chapeau de disque de frein (4), dans lequel le disque de frein composite comprend en outre une pluralité d'assemblages de connexion de disque de frein composite, et l'anneau de friction (5) est relié au chapeau de disque de frein (4) par la pluralité d'assemblages de connexion de disque de frein composite ;
chacun de la pluralité d'assemblages de connexion de disque de frein composite comprend un manchon (1) et un élément de ressort (2) ; dans lequel le manchon (1) comprend une plaque de pression supérieure (101), une plaque de pression inférieure (102) et une colonne de connexion (103) reliant la plaque de pression supérieure (101) et la plaque de pression inférieure (102) ; la colonne de connexion (103) est pourvue d'un trou de connexion (104), et une paire de fentes de serrage en forme de U est formée entre la plaque de pression supérieure (101), la plaque de pression inférieure (102) et la colonne de connexion (103) ; et l'élément de ressort (2) comprend une paire de pièces élastiques coopérant avec la paire de fentes de serrage en forme de U et un pont de connexion (201) reliant la paire de pièces élastiques ;
le chapeau de disque de frein comprend un bord de chapeau (4), une pluralité d'encoches de chapeau de disque (401) pour le montage des éléments de ressort (2) sont uniformément réparties dans une direction circonférentielle d'un bord extérieur du bord de chapeau (4), des marches de chapeau de disque (402) sont prévues entre des encoches de chapeau de disque adjacentes (401) de la pluralité d'encoches de chapeau de disque (401), les pièces élastiques des assemblages composites de liaison de disque de frein sont encliquetées sur les marches de chapeau de disque (402), les plaques de pression inférieures (102) des assemblages de liaison de disques de frein composites sont placées entre le chapeau de disque de frein (4) et l'anneau de friction (5), un anneau intérieur (504) est placé à l'intérieur de l'anneau de friction (5), des trous de montage (505) coopérant avec les encoches de chapeau de disque (401) sont uniformément répartis sur l'anneau intérieur (5), les colonnes de connexion (103) des assemblages de connexion de disques de frein composites sont insérées dans les trous de montage (505), et l'anneau de friction (5) et le chapeau de disque de frein (4) sont reliés par des attaches (3) insérées dans les trous de connexion (104) ;
**caractérisé en ce que**,
une surface supérieure et une surface inférieure de chaque étape du chapeau de disque (402) sont respectivement pourvues d'une rainure supérieure (403) et d'une rainure inférieure (404) pour positionner la partie supérieure de la pièce élastique (202) et la partie inférieure de la pièce élastique (203).

2. Le disque de frein composite selon la revendication 1, dans lequel une pluralité d'encoches d'anneau de friction (506) sont uniformément réparties dans une direction circonférentielle de l'anneau intérieur (5), des protubérances d'anneau de friction sont prévues entre les encoches d'anneau de friction adjacentes de la pluralité d'encoches d'anneau de friction (506), et les trous de montage (505) sont prévus sur les protubérances d'anneau de friction.

3. Le disque de frein composite selon la revendication 1, dans lequel chacune des deux fentes de serrage en forme de U comprend une surface inférieure (106) pour transférer un couple et deux surfaces latérales (107) pour transférer une force axiale.

4. Le disque de frein composite selon la revendication 1 ou 3, dans lequel l'assemblage de connexion comprend en outre un élément de fixation (3) inséré dans le trou de connexion (104).

5. Le disque de frein composite selon la revendication 4, dans lequel l'élément de fixation (3) est un boulon de fixation, un rivet ou une paire de boulons et d'écrous.

6. Le disque de frein composite selon la revendication 1, dans lequel chaque paire de pièces élastiques comprend une partie de pièce élastique supérieure (202) et une partie de pièce élastique inférieure (203), dans laquelle la partie de pièce élastique supérieure (202) et/ou la partie de pièce élastique inférieure (203) ont une structure incurvée (204).

7. Le disque de frein composite selon la revendication 1, dans lequel le pont de liaison (201) a une structure en feuille, en maille, en bande, en colonne, cubique ou incurvée.

8. Le disque de frein composite selon la revendication 1, dans lequel le manchon (1) et le ressort (2) sont en acier, en fer, en aluminium et en alliage d'aluminium, en céramique ou en fibre de carbone.
